# EUROPEAN PATENT SPECIFICATION

(11) **EP 2 413 006 B1**
(45) Date of publication and mention of the grant of the patent: **16.01.2013**
(21) Application number: 11175916.3
(22) Date of filing: 29.07.2011
(51) Int. Cl.: F16J 9/26, C23C 4/08

(54) **Piston ring**
Kolbenring
Segment de piston

(30) Priority: 29.07.2010 JP 2010169952; 22.04.2011 JP 2011095595
(43) Date of publication of application: 01.02.2012
(73) Proprietor: Nippon Piston Ring Co., Ltd., Saitama-shi, Saitama 338-8503 (JP)
(72) Inventor: Aizawa, Takeshi, Saitama 338-8503 (JP); Kubo, Takasumi, Saitama 338-8503 (JP); Omiya, Takao, Saitama 338-8503 (JP)
(74) Representative: Klunker . Schmitt-Nilson . Hirsch

(56) References cited:
- WO-A1-98/25017
- WO-A1-2008/083793
- WO-A1-2010/098382

## Description

### 1. Field of the Invention

The present invention relates to a piston ring, more particularly, a piston ring having a thermal sprayed laminated coating tightly adhering thereto, which coating is excellent in wear resistance, scuffing resistance and initial running-in property as well as less damaging to a mating material.

### 2. Description of the Related Art

Recently, internal-combustion engines have become higher-powered and higher-performance, which makes the environment where sliding members such as piston rings are used still more severe. Sliding members are thus demanded to have a good wear resistance and scuffing resistance.

In order to improve the wear resistance and the scuffing resistance of a sliding member such as a piston ring for internal-combustion engines, for example, the sliding surface of a piston ring for automobiles is subjected to a surface treatment such as PVD coating or nitrided layer. Among these surface treatments, in particular, PVD coating provides an excellent wear resistance, and therefore is widely used in practice as a surface treatment for piston rings to be used under severe operating conditions.

In the case of a large piston ring for ships etc., the sliding surface is subjected to a surface treatment such as coating of hard chrome plating or ceramic coating by plasma spraying technique. Among these surface treatments, in particular, the cermet thermal spray coating which consists of a hard ceramic phase such as chromium carbide and a metal phase formed by the plasma spraying technique has an excellent wear resistance and scuffing resistance.

Patent Documents 1 to 6 below are the prior art references concerning a plasma spray coating. Patent Document 1 discloses a sliding member for which a good wear resistance and scuffing resistance are demanded. The sliding member has on its surface a thermal sprayed layer formed by plasma spraying of a mixed powder of 80 to 40 wt% of Ni-based self-fluxing alloy powder including Cr, B, Si, C, Fe, Co and 20 to 60 wt% ofMo powder. Patent Document 2 discloses a piston ring having a base thermal spray coating with a high peel resistance which is formed on an outer periphery and a top thermal spray coating with an excellent wear resistance and scuffing resistance which is formed on the base thermal spray coating. The piston ring has the base thermal spray coating that has a thermal spray material including 60 to 80 wt% of Mo with a particle size of not less than 44 µm to less than 125 µm and 20 to 40% of Ni-based self-fluxing alloy with a particle size of not less than 10 µm to less than 64 µm, and that has a thickness of 20 to 100 µm. Patent Document 3 discloses a thermal spray coating sliding material which has a Mo metal phase, or not less than 10 vol% ofMo metal phase and a metal phase and/or alloy phase including one or more of Fe, Ni, Co, Cr, Cu and Zn. According to Patent Document 3, the metal phase and/or alloy phase improves the adhesion, the toughness of the coating, and the fineness.

Patent Document 4 discloses a piston ring having a thermal sprayed film on its sliding surface, which coating has a NiCr alloy phase, and a hard ceramic phase including chromium carbide. The piston ring has the thermal spray coating of which porosity is not more than 1%. According to Patent Document 4, in this thermal sprayed film, damage to a mating material caused by the hard ceramic phase can be reduced by making its porosity be not more than 1% using HVOF spraying or HVAF spraying technique. Patent Document 5 discloses a piston ring having on its sliding surface a thermal spray coating having a structure in which Mo, NiCr alloy and a cermet region including chromium carbide are mixed. According to Patent Document 5, this thermal spray coating has an excellent wear resistance and scuffing resistance as well as is less damaging to a mating material.

### (Prior Art References)

Patent Document 1: Japanese Laid-Open Patent Application 59-150080 A
Patent Document 2: Japanese Laid-Open Patent Application 03-260474 A
Patent Document 3: Japanese Laid-Open Patent Application 2004-346417 A
Patent Document 4: Japanese Laid-Open Patent Application 2005-155711 A
Patent Document 5: Japanese Laid-Open Patent Application 2007-314839 A
Patent Document 6: WO-A-2008/083793

### SUMMARY OF THE INVENTION

In the case of a large piston ring for ships etc., a thermal spray coating is often formed on its sliding surface, and it is important for such a large piston ring to have both characteristics that the wear of the piston ring per se is small (wear resistance) and that the wear of the mating material of the piston ring is small (less damaging to a mating material). Particularly, in the case of a piston ring for ships, the scuffing resistance and decreased wear of bores, which are the mating material of piston rings, tend to be more emphasized than the wear resistance of a piston ring per se, because a ship runs while replacing piston rings at regular intervals. Moreover, after replacement of piston rings, it is demanded that the initial running-in property to bores should be excellent.

However, piston rings disclosed in the above-mentioned Patent Documents 1 to 5 cannot fulfill such demands. For example, in cases of the thermal spray coatings disclosed in Patent Documents 1 to 3, the initial running-in property is not good enough, and damage to a mating material is not sufficiently small. In cases of the piston rings disclosed in Patent Documents 4 and 5, although they have an excellent wear resistance based on a hard ceramic phase such as chromium carbide, the piston rings are still highly damaging to a mating material. Their scuffing resistance and initial running-in property are also insufficient. Thus, development of a thermal spray coating which ensures an excellent wear resistance, scuffing resistance and initial running-in property of a piston ring as well as ensures small damage to a mating material has been demanded.

The present invention has been completed to solve the above-described problems. The object of the present invention is to provide a piston ring having a thermal sprayed laminated coating tightly adhering thereto, which coating is excellent in wear resistance and scuffing resistance as well as less damaging to a mating material.

The piston ring according to the present invention has: a thermal sprayed base layer formed by thermal spraying of a mixed powder including at least Mo powder, Ni-based self-fluxing alloy powder and Cu and/or Cu alloy powder; and a thermal sprayed surface layer including Cu, which is formed on a sliding surface of the piston ring after forming the thermal sprayed, wherein the thermal sprayed base layer at least includes 50 to 80 % by mass ofMo, 1 to 12 % by mass of Cu and/or Cu alloy, and a remainder being Ni-based self-fluxing alloy, the area ratio of Cu and/or Cu alloy phase which appears on the sliding surface of the thermal sprayed base layer is 0.5 to 15%, and the thermal sprayed surface layer includes 70 to 100% by mass of Cu. The phrase "appears on a sliding surface" as used herein means that it appears on a surface obtained after polishing the sliding surface per se from the top of the sliding surface.

In the present invention, the thermal sprayed base layer includes Mo as a base metal, which is a high melting point metal and has an excellent wear resistance and scuffing resistance; a self-fluxing, Ni-based alloy as a binder; and Cu and/or Cu alloy dispersed therein. According to the present invention, the wear resistance can be more improved by Ni-based self-fluxing alloy as a binder, and damage to a mating material can be reduced by virtue of Cu and/or Cu alloy dispersed between Mo and Ni-based self-fluxing alloy. In addition, a Cu and/or Cu alloy phase always appears on the sliding surface of the thermal sprayed base layer at an area ratio of 0.5 to 15%, and therefore an improved scuffing resistance can also be obtained. Moreover, in the present invention, the thermal sprayed surface layer including 70 to 100% by mass of Cu is formed on the thermal sprayed base layer, by which not only an effect to improve the initial running-in property but also an effect to further reduce damage to a mating material can be obtained. Furthermore, because the thermal sprayed base layer and thermal sprayed surface layer both include Cu, the adhesion (ply adhesion) of the thermal sprayed laminated coating formed by them is improved, which can make the above-described effects more sustained.

In the piston ring according to the present invention, the area ratio of the Cu and/or Cu alloy phase which appears on a cross-section of the thermal sprayed base layer is preferably 0.1 to 10%.

It is preferred that the piston ring according to the present invention is used for a ship.

By the piston ring according to the present invention, Mo metal excellent in wear resistance and scuffing resistance is used together with Ni-based self-fluxing alloy as a binder, thereby improving the wear resistance still more. Cu and/or Cu alloy dispersed in the thermal sprayed base layer at a prescribed area ratio can improve the scuffing resistance as well as can reduce damage to a mating material. Moreover, a thermal sprayed surface layer which includes a prescribed amount ofCu is formed on the thermal sprayed base layer, which can improve the initial running-in property and reduce damage to a mating material, as well as can enhance the adhesion (ply adhesion) of the thermal sprayed laminated coating formed by the thermal sprayed base layer and the thermal sprayed surface layer. Further, as a result, the above-described effects are more sustained. The piston ring according to the present invention may be preferably applied to the sliding surface of piston rings, for example, a large piston ring for a ship to be used while replacing the former.

### BRIEF DESCRIPTION OF THE DRAWINGS

Fig. 1 is a cross-sectional view showing an example of the piston ring according to the present invention.
Fig. 2 is a drawing for explaining the morphology of a Cu and/or Cu alloy phase which appears on the surface obtained after polishing the sliding surface of the thermal sprayed base layer of the present invention.
Fig. 3 is a drawing for explaining the morphology of a Cu and/or Cu alloy phase which appears on the cross-section of the thermal sprayed base layer of the present invention in the axial direction of the piston ring.
Fig. 4 is a drawing for explaining the morphology of a Cu and/or Cu alloy phase which appears on the cross-section of the thermal sprayed laminated coating according to the present invention in the axial direction of the piston ring.
Fig. 5 is a drawing showing the constituting principle of a high-load type abrasion tester used for measurement of abrasion loss.
Fig. 6 is a drawing showing the constituting principle of a rotary type flat sliding friction tester used for measurement of scuffing load.

### DESCRIPTION OF THE PREFERRED EMBODIMENTS

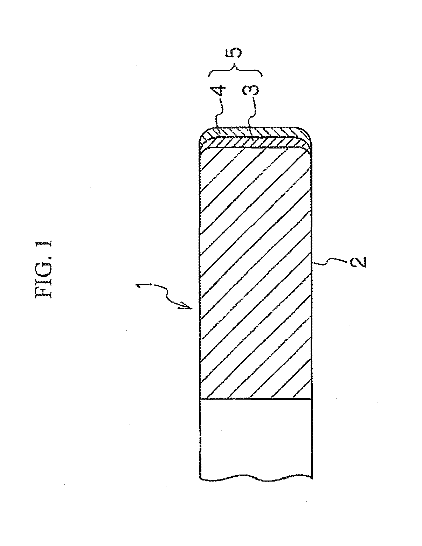

The piston ring according to the present invention will be described in detail. Fig. 1 is a cross-sectional view showing an example of the piston ring according to the present invention.

As shown in Fig. 1, in piston ring 1 according to the present invention, thermal sprayed laminated coating 5 is formed on the outer periphery of sliding surface of piston ring base material 2. Thermal sprayed laminated coating 5 is formed by laminating thermal sprayed base layer 3 and thermal sprayed surface layer 4 in order. Particularly, thermal sprayed laminated coating 5 is formed by (i) thermal sprayed base layer 3 formed by thermal spraying of a mixed powder which at least includes Mo powder, Ni-based self-fluxing alloy powder and Cu and/or Cu alloy powder and (ii) thermal sprayed surface layer 4 which includes Cu. Thermal sprayed base layer 3 at least includes 50 to 80% by mass of Mo, 1 to 12% by mass ofCu and/or Cu alloy, and Ni-based self-fluxing alloy as a remainder. Thermal sprayed surface layer 4 includes 70 to 100% by mass of Cu.

The constitutions of piston ring 1 according to the present invention will be described hereinbelow.

### (Piston Ring Base Material)

Examples of the piston ring base material 2 on which thermal sprayed laminated coating 5 is formed include various materials, e.g., boron cast iron, flake graphite cast iron, spheroidal graphite cast iron, CV cast iron, steel and the like.

### (Thermal Sprayed Base Layer)

Thermal sprayed base layer 3 is formed on the sliding surface of piston ring 1 by plasma spraying or HVOF spraying. In plasma spraying, by using a plasma jet generated by a plasma spray gun, a thermal spray material is heated and accelerated to melt and almost melt the material, and the molten or almost molten material is sprayed on a substrate. The principle is as well known. When voltage is applied between the cathode and the anode, a DC arc is generated, which causes ionization of the working gas (such as an argon gas) fed from the backside of the plasma spray gun to generate plasma. The thermal spray material is carried by an argon gas or the like into the generated plasma flame to be sprayed on a substrate, thereby forming thermal sprayed base layer 3 on piston ring base material 2. HVOF (an abbreviation for High Velocity Oxygen Fuel) spraying is a thermal spraying by a high speed jet flame using oxygen and fuel. In particular, a mixed gas of high pressure oxygen and fuel is combusted in a combustion chamber to generate a combustion flame. The combustion flame is once narrowed through a nozzle. The moment the narrowed combustion flame is released into the atmosphere, gas expansion is generated rapidly to produce a supersonic jet stream. The thermal spray material is accelerated by high acceleration energy, not being oxidized nor changed in composition almost at all, to form high density thermal sprayed base layer 3 on piston ring base material 2.

As a thermal spray material, a material including at least: Mo powder which attains the Mo content in formed base layer 3 of 50 to 80% by mass; Cu powder and/or Cu alloy powder which attain(s) the Cu and/or Cu alloy content in formed base layer 3 of 1 to 12% by mass; and Ni-based self-fluxing alloy powder which makes the remainder of base layer 3 Ni-based self-fluxing alloy is used. Because the content of each metal or alloy in thermal sprayed base layer 3 is usually equal to the composition ratio of powder components in the thermal spray material, the content of each component in thermal sprayed base layer 3 described above can be regarded as the ratio of each component in a thermal spray material. Therefore, the amount of powders which are included in a thermal spray material may be appropriately regulated in order to attain a desired component ratio in thermal sprayed base layer 3.

Mo is a high melting point metal included in thermal sprayed base layer 3 at an amount of 50 to 80% by mass. Because thermal sprayed base layer 3 including Mo has an excellent wear resistance and scuffing resistance, Mo is preferably used as a base metal for thermal sprayed base layer 3 formed on a piston ring. The Mo content of less than 50% by mass makes the wear resistance and the scuffing resistance poor. On the other hand, the Mo content of more than 80% by mass leads to a high cost. It has been already confirmed that a desired wear resistance and scuffing resistance can be obtained by making the Mo content not less than 50% by mass and not more than 80% by mass. The Mo content, is represented herein by a value measured with a backscattering measuring device. As a thermal spray material, Mo powder with an average particle diameter of 10 to 63 µm is preferably used, but the particle size is not restricted thereto. The average particle diameter ofMo powder is represented herein by a value measured with a particle size distribution analyzer.

Ni-based self-fluxing alloy is a self-fluxing alloy which is the remainder of thermal sprayed base layer 3 including Mo, Cu and/or Cu alloy, other metal(s) or alloy(s) optionally included and unavoidable contaminants, and serves as a binder of the base metal Mo. Moreover, a good wear resistance can be advantageously obtained by virtue of the fact that Ni-based self-fluxing alloy is a self-fluxing alloy. Examples of the Ni-based self-fluxing alloy include NiCr alloy, NiCo alloy and the like, and NiCr alloy is especially preferred. Because Ni-based self-fluxing alloy is included in thermal sprayed base layer 3 including Mo, Cu and/or Cu alloy, etc. its effect as a Mo binder may be lowered and the adhesion between molten Mo particles which are included in the thermal spray coating may decrease when the content of Ni-based self-fluxing alloy is less than 20% by mass. On the other hand, the scuffing resistance may be lowered when the content omni-based self-fluxing alloy is more than 50% by mass. However, the present invention is free from such a problem since the maximum content of the remainder (Ni-based self-fluxing alloy) of thermal sprayed base layer 3 containing e.g. 50% by mass of Mo and 1% by mass of Cu and/or Cu alloy is 49% by mass. The content of Ni-based self-fluxing alloy described herein is also represented by a value measured with a backscattering measuring device. As a thermal spray material, Ni-based self-fluxing alloy powder with an average particle diameter of 10 to 68 µm is preferably used, but the particle size is not restricted thereto. The average particle diameter of Ni-based self-fluxing alloy powder is represented herein by a value measured with a particle size distribution analyzer.

Cu and/or Cu alloy is (are) included in thermal sprayed base layer 3 in an amount of 1 to 12% by mass. By virtue of Cu and/or Cu alloy included in Mo base metal including Ni-based self-fluxing alloy as a binder, the wear resistance and scuffing resistance of thermal sprayed base layer 3 can be improved as well as damage to a mating material can be reduced.

Examples of the Cu and/or Cu alloy include Cu, CuAlFe alloy (e.g. Cu-9Al-1Fe alloy), CuNi alloy and the like. Specially, preferred are Cu and CuAlFe alloy, which may be used individually or in combination. In the case where they are used in combination, the total content of Cu and Cu alloy should be within the range described above. When the content of Cu and/or Cu alloy is less than 1% by mass, the scuffing resistance may decrease. On the other hand, when the content of Cu and/or Cu alloy is more than 12% by mass, the Vickers hardness of thermal sprayed base layer 3 may decreases, and a wear resistance may be reduced. It has been already confirmed that a good scuffing resistance and wear resistance can be obtained by using Cu and/or Cu alloy at a content of not less than 1% by mass and not more than 12% by mass. The content of Cu and/or Cu alloy described herein is also represented by a value measured with a backscattering measuring device. As a thermal spray material, Cu powder and/or Cu alloy powder with an average particle diameter of 43 to 98 µm is preferably used, but the size is not restricted thereto. The average particle diameter of powders described herein is also represented by a value measured with a particle size distribution analyzer.

Thermal sprayed base layer 3 may be formed using a material powder which includes a metal powder(s) and/or an alloy powder(s) other than the above-described powders, as long as the feature of the present invention is not adversely affected.

### (Morphology of Cu and/or Cu Alloy Phase)

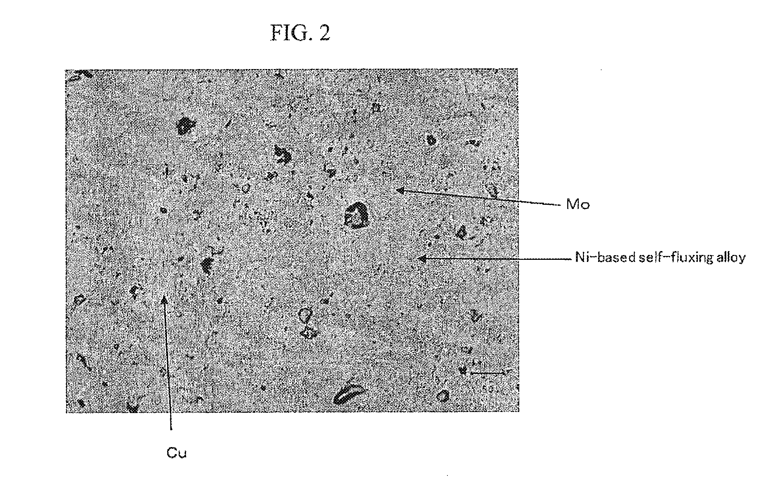

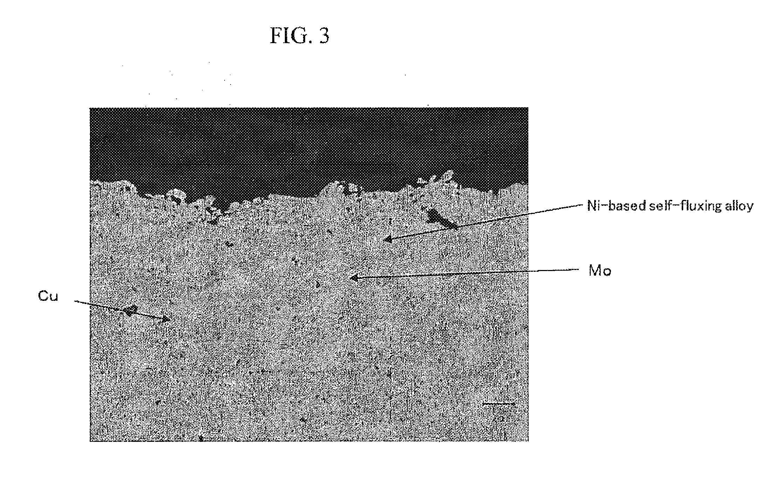

Fig. 2 is a drawing for explaining the morphology of Cu and/or Cu alloy phase which appears on the sliding surface of formed thermal sprayed base layer 3. Fig. 3 is a drawing for explaining the morphology of Cu and/or Cu alloy phase which appears on the cross-section of formed thermal sprayed base layer 3. The plain view in Fig. 2 is an observation of the surface which appears after polishing the sliding surface per se, and the cross-sectional view in Fig. 3 is an observation of the surface which appears after polishing the cross-section obtained by cutting the piston ring after formation of the thermal sprayed base layer by a plane perpendicular to the sliding surface (i.e. the cross-section in the axial direction of the piston ring). The structures shown in Figs 2 and 3 were observed with a metallographical microscope.

As shown in Figs 2 and 3, thermal sprayed base layer 3 has: a Mo metal phase including Mo; a Ni-based self-fluxing alloy phase including Ni-based self-fluxing alloy; and a Cu and/or Cu alloy phase including Cu and/or Cu alloy. In particular, the Cu and/or Cu alloy phase has a flattened shape as shown in Figs 2 and 3. The flattened shape has a flat stretched in the in-plane direction in the sliding surface. Further thickness of the flattened shape in the direction normal to the sliding surface is thin. The Cu and/or Cu alloy phase having such a flattened shape always appears on the sliding surface of thermal sprayed base layer 3 in the state of being stretched in the sliding surface, and furthermore, exists in the state of being piled between a Mo metal phase and a Ni-based self-fluxing alloy phase in the direction of the thickness of thermal sprayed base layer 3 as well as being distributed (dispersed) uniformly or approximately uniformly within thermal sprayed base layer 3.

The Cu and/or Cu alloy phase which appears on the sliding surface of thermal sprayed base layer 3 in the state of being distributed (dispersed) uniformly or approximately uniformly exists not less than 0.5% and not more than 15% in the area ratio. The scuffing resistance is improved by virtue of the Cu and/or Cu alloy phase which constantly exists on the sliding surface worn due to sliding on a mating material in the state of being stretched in the in-plane direction and at the area ratio described above. When the area ratio of Cu and/or Cu alloy phase is less than 0.5%, the scuffing resistance may be insufficient. When the area ratio of Cu and/or Cu alloy phase is more than 15%, the Vickers hardness decreases, which may result in the insufficient wear resistance. The phrase "appears on a sliding surface" means that it appears on a surface obtained after polishing the sliding surface per se from the top of the sliding surface.

The Cu and/or Cu alloy phase which appears on the sliding surface at an area ratio described above exists on the cross-section of thermal sprayed base layer 3 at an area ratio of not less than 0.1% and not more than 10%. As shown in Fig. 3, the Cu and/or Cu alloy phase exists in the state of being compressed and piled up in the direction of the thickness of thermal sprayed base layer 3. In plasma spraying or HVOF spraying, which is typically used for formation of thermal sprayed base layer 3 in the present invention, a thermal spray material in a molten or almost molten state is sprayed on the sliding surface of a piston ring. Therefore, the powder material thermally sprayed on the sliding surface is piled up on a substrate in the state of being pressed, and deposited on the sliding surface in the flattened shape as shown in Figs 2 and 3. Thus, the Cu and/or Cu alloy phase included in thermal sprayed base layer 3 exists at an area ratio of 0.5 to 15% when observed from a sliding surface side but exists at a lower area ratio of 0.1 to 10% when observed in the cross-section.

The size of the Cu and/or Cu alloy phase which exists in thermal sprayed base layer 3 varies depending on from what direction it is observed. For example, as illustrated in Fig. 2, the size was 20 µm to 150 µm when observed from the sliding surface side in the plan view; and as illustrated in Fig. 3, the size was also 20 µm to 150 µm when observed in the cross-section of the sliding surface, The size also varies depending on the size of a material powder and thermal spraying conditions, and it is preferred that the size be approximately within the above-described range. It is understood that, even when the size observed in the plan view is equal to the size observed in the cross-section, the shapes are different from each other. Further, the Cu and/or Cu alloy phase has a relatively planar, flattened shape extending two-dimensionally when observed in the plan view, and is in the state of being thinly pressed in the direction of the thickness when observed in the cross-section. It is noted that the Cu and/or Cu alloy phase has a major axis and a minor axis, and the "size" is represented herein by the measured value of the major axis.

In the piston ring according to the present invention, it is preferred that the Vickers hardness of thermal sprayed base layer 3 is 400 to 700 HV0.3, preferably 450 to 650 HV0.3, and that the Vickers hardness of the Cu and/or Cu alloy phase existing in thermal sprayed base layer 3 at the above-described area ratio is 100 to 200 HV0.01. The Vickers hardness of thermal sprayed base layer 3 and the Vickers hardness of the Cu and/or Cu alloy phase described above can be achieved by regulating the content of each metal component which is included in thermal sprayed base layer 3 to be within the above-described range and by regulating the area ratio of the Cu and/or Cu alloy phase to be within the above-described range. Thermal sprayed base layer 3 having the Vickers hardness within the above-described range has a good wear resistance against a mating material. In addition, the Cu and/or Cu alloy phase having the Vickers hardness within the above-described range provides a good scuffing resistance against a mating material, and reduces damage to a mating material.

The Vickers hardness of thermal sprayed base layer 3 is the hardness of the whole cross-section of thermal sprayed base layer 3 in which Cu and/or Cu alloy is(are) dispersed, and was measured with a Vickers hardness tester at a 0.3 kgf load, which was evaluated using a unit of "HV0.3". The Vickers hardness of the Cu and/or Cu alloy phase is the hardness of the Cu and/or Cu alloy phase in the cross-section of thermal sprayed base layer 3 in which Cu and/or Cu alloy is(are) dispersed, and was measured with a Vickers hardness tester at a 0.01 kgf load, which was evaluated using a unit of "HV0.01". It is noted that the average of the measured values obtained at randomly selected five sites is defined as the value of the Vickers hardness.

In the piston ring according to the present invention, the porosity of thermal sprayed base layer 3 is preferably not more than 8% (area %). Thermal sprayed base layer 3 used in the present invention which includes a Cu and/or Cu alloy phase can attain the porosity of not more than 8%, compared to thermal sprayed base layer 3 not including a Cu and/or Cu alloy phase. When the porosity of thermal sprayed base layer 3 is more than 8%, cracking or stripping which starts from the voids may occur in the boundary between thermal sprayed base layer 3 and a piston ring base material or in thermal sprayed base layer 3. In view of the wear resistance based on the fineness and the oil retention capacity of thermal sprayed base layer 3, it is more preferred that the porosity be not more than 6%. The lower limit of the porosity is not restricted, and may be, for example, 0.5%.

The thickness of thermal sprayed base layer 3 is not restricted. When formed on the sliding surface of a large piston ring for a ship etc., the thickness of thermal sprayed base layer 3 may be, for example, 150 µm to 800 µm. In the case of a piston ring for an automobile etc. whose size is not so large as those for a ship, the thickness may be arbitrary selected from a wide range between e.g. 100 µm to 300 µm, depending on the size etc. of the piston ring.

### (Thermal Sprayed Surface Layer)

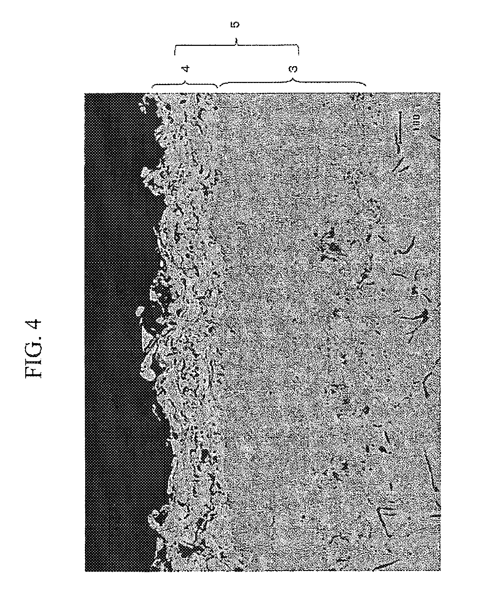

As shown in Fig. 4, thermal sprayed surface layer 4 is a Cu and/or Cu alloy layer which includes 70 to 100% by mass of Cu, and constitutes thermal sprayed laminated coating 5 with above-described thermal sprayed base layer 3. By forming thermal sprayed surface layer 4 on thermal sprayed base layer 3, the initial running-in property can be improved while reducing damage to a mating material still more. Thermal sprayed surface layer 4 includes 70 to 100% by mass of Cu, and thermal sprayed base layer 3 also includes Cu and/or Cu alloy. Therefore, thermal sprayed laminated coating 5 is layers both of which includes Cu. As a consequence, the adhesion of both layers (ply adhesion) increases, which allows the effects that the initial running-in property is improved and that damage to a mating material is reduced to be more sustained.

Similarly to thermal sprayed base layer 3, thermal sprayed surface layer 4 may be formed on thermal sprayed base layer 3 by plasma spraying, HVOF spraying or arc spraying. As a thermal spray material, Cu and/or Cu alloy powder, or wire which attains the Cu content in formed surface layer 4 of 70 to 100% by mass is used. Because the content of Cu in thermal sprayed surface layer 4 is usually equal to the Cu composition ratio of powder components in the thermal spray material, the Cu content in thermal sprayed surface layer 4 described above can be regarded as the ratio of Cu in a thermal spray material. Therefore, the amount of powders which are included in a thermal spray material may be appropriately regulated to attain a desired component ratio in thermal sprayed surface layer 4. As a thermal spray material, Cu and/or Cu alloy powder having an average particle diameter of 15 to 125 µm is preferably used, but the size is not restricted thereto. The average particle diameter described herein is also represented by a value measured with a particle size distribution analyzer.

Examples of the Cu and/or Cu alloy composition of thermal sprayed surface layer 4 include Cu composition, CuAlFe alloy composition, CuNi alloy composition and the like. Specially preferred are Cu composition and CuAlFe alloy composition, which may be used individually or in combination. The CuAlFe alloy composition may be a mixture of Cu, Al and Fe powders. Other metal component(s) may be included other than the above-described components, as long as the feature of the present invention is not adversely affected. The composition of CuAlFe alloy is not restricted, and the alloy including 9 to 25% by mass of Al, 0.7 to 5% by mass of Fe, and Cu as the remainder is preferably used.

When the Cu content in thermal sprayed surface layer 4 is less than 70% by mass, improvement in the initial running-in property and reduction of damage to a mating material may be insufficient. Particularly, in view of the scuffing resistance and the ply adhesion between thermal sprayed base layer 3 and surface layer 4, the Cu content is preferably 85 to 100% by mass, more preferably 90 to 100% by mass. Similarly to the above, the Cu content is represented herein by a value measured with a backscattering measuring device.

Thermal sprayed surface layer 4 is formed on thermal sprayed base layer 3 by thermal spraying. A mechanical processing such as polishing or blasting is not performed on the surface of thermal sprayed base layer 3 before formation of thermal sprayed surface layer 4. A conventionally-used thermal sprayed base layer not containing Cu is highly damaging to a mating material, and therefore a mechanical processing such as polishing or blasting is required. However, in the present invention, because thermal sprayed base layer 3 includes a prescribed amount of Cu and/or Cu alloy, surface layer 4 can directly deposits on the non-polished and rough surface of the base layer 3 i as shown in Fig. 4. Thermal sprayed base layer 3 not subjected to a mechanical processing is free from a residual stress due to the processing. Thus, in the present invention, decrease in the ply adhesion between base layer 3 and surface layer 4 caused by the residual stress can be suppressed when surface layer 4 is termed on base layer 3. Moreover, because thermal sprayed base layer 3 and thermal sprayed surface layer 4 both include Cu, the compatibility of both layers increases and the ply adhesion can be improved still more, which advantageously sustains the effects of thermal sprayed laminated coating 5 still more.

As explained hereinabove, in thermal sprayed base layer 3 for the piston ring according to the present invention, a Mo phase which is a high melting point metal having an excellent wear resistance and scuffing resistance is used as a base metal; a Ni- based self-fluxing alloy phase such as NiCr is used as a binder; and a Cu and/or Cu alloy phase which has a good scuffing resistance and is less damaging to a mating material is dispersed at a prescribed area ratio. In addition, thermal sprayed surface layer 4 which includes a prescribed amount of Cu is formed on thermal sprayed base layer 3. By such constitutions, the initial running-in property can be improved and damage to a mating material can be reduced still more, as well as the adhesion (ply adhesion) of the thermal sprayed laminated coating formed by the thermal sprayed base layer and the thermal sprayed surface layer increases to allow the above-described effects to be more sustained. Furthermore, both thermal sprayed base layer 3 and surface layer 4 can be formed by thermal spraying technique and no mechanical processing is necessary for base layer 3 before forming the surface layer 4, and therefore the man-hour can be saved, which is also advantageous from the viewpoint of cost reduction.

### EXAMPLES

The present invention will be described further in detail with reference to examples and comparative examples. In Reference Examples 1 to 6 and Experiments 1 to 3, then constitutions of thermal sprayed base layer 3 and the property thereof were evaluated. Thereafter, in Examples 1 to 13 constitutions of thermal sprayed laminated coating 5 formed by thermal sprayed surface layer 4 on thermal sprayed base layer 3 and the property thereof were evaluated.

### [Reference Example 1]

Mo metal powder with an average particle diameter of 50 µm, NiCr alloy powder with an average particle diameter of 40 µm and Cu powder with an average particle diameter or 70 µm were mixed so that the content of the powders became 64% by mass, 35% by mass and 1% by mass, respectively, to prepare a thermal spray material. The component composition of the NiCr alloy is: Ni, 70.5% by mass; Cr, 17% by mass; Fe, 4% by mass; Si, 4% by mass; B, 3.5% by mass; and C, 1% by mass.

This thermal spray material was plasma-sprayed under the conditions described below to form thermal sprayed base layer 3 having a thickness of 300 µm on the sliding surface of piston ring base material 2 including boron cast iron. The component composition of thermal sprayed base layer 3 was quantified with a backscattering measuring apparatus (manufactured by NHV Corporation) to find that base layer 3 had the following composition: Mo, 64% by mass; NiCr alloy, 35% by mass; and Cu, 1% by mass, which was the same as the composition of the thermal spray material used.

### [Reference Examples 2 to 6 and Comparative Reference Examples 1 to 4]

A variety of thermal sprayed base layers 3 were formed on the sliding surface of piston ring base material 2 under the same thermal spraying conditions as in Reference Example 1. Based on the material powder used in Reference Example 1, the composition of the thermal spray material was changed by regulating the amount of each component to attain the respective component compositions shown in Table 1. The component composition of each thermal sprayed base layer 3 was measured in the same manner as in Reference Example 1, and shown in Table 1. In Table 1, "CuAl" in the columns of Reference Examples 5, 6 and Comparative Reference Examples 3, 4 means that alloy powder of 90Cu-9Al-1Fe in terms of % by mass having an average particle diameter of 45 µm was used.

### [Conventional Examples 1 and 2]

Regulating the amount of each component to attain the component compositions shown in Table 1, thermal sprayed base layers 3 were formed on the sliding surface of the piston ring under the same thermal spraying conditions as in Reference Example 1. "Cr₃C₂" in the column of Conventional Example 2 means that Cr₃C₂ powder having an average particle diameter of 30 µm was used.

### [Measurement and Rating]

The sliding surface area ratio, the cross-sectional area ratio and the Vickers hardness of the Cu phase or Cu alloy phase of thermal sprayed base layers 3 were measured in the manner described below. The Vickers hardness, the wear resistance index, the wear resistance index of the mating material and the scuffing resistance index of the thermal sprayed base layer 3 and Cu or Cu-Al-Fe alloy were measured in the manner described below, and evaluated. The results of evaluation were shown in Table 1.

### (Thermal Spraying Conditions)

Plasma-spraying conditions: Sulzer Metco, 9MB Plasma Spray Gun
   60 to 70V voltage
   500A current
(Area Ratio)

As for the area ratio, the sliding surface of thermal sprayed base layer 3 was polished, and the image of the resulting surface was taken at a magnification of x200 with a metallographical microscope, followed by analyzing the image using an image analysis software, thereby measuring the area ratio of the Cu phase (which is referred to as "sliding surface area ratio"). On the other hand, a cross-section obtained by cutting the piston ring by a plane parallel to the normal line of the sliding surface (or in the axial direction of the ring) was polished, and the image of the cross-section was taken at the magnification of x200 with the metallographical microscope, followed by analyzing the image using the image analysis software, thereby measuring the area ratio of the Cu phase (which is referred to as "cross-sectional area ratio"). The results were shown in Table 1. Polishing of thermal sprayed base layer 3 was carried out using a series of progressively finer abrasive papers of 180,240,320,600,800 and 1200 grit, followed by buffing with 1.0 µm powder of alumina (aluminum oxide) for 20 seconds. The resulting polished surface was used as a sample for observation of area ratio.

### (Vickers Hardness)

In Table 1, values of the Vickers hardness ofCu or Cu-Al-Fe are results of measurements of the Vickers hardness of the Cu phase or the Cu-Al-Fe phase in the cross-section, and values of the Vickers hardness of thermal sprayed base layers 3 are results of measurements of the Vickers hardness of the whole cross-section of thermal sprayed base layers 3 which includes the Cu phase or the Cu-Al-Fe phase. Because a hard Mo metal phase and a soft Cu phase or Cu-Al-Fe phase coexist in thermal sprayed base layer 3, values of the Vickers hardness of thermal sprayed base layers 3 can be regarded as the average hardness of the whole thermal sprayed base layers 3. Using a micro Vickers hardness tester (manufactured by Akashi), each of the Vickers hardness ofCu or Cu-Al-Fe was measured at a 0.01 kgf load, and each of the Vickers hardness of thermal sprayed base layers 3 was measured at a 0.3 kgf load. The Vickers hardness was represented by the average of the measured values obtained at randomly selected five sites.

### (Wear Resistance Index and Wear Resistance Index of Mating Material)

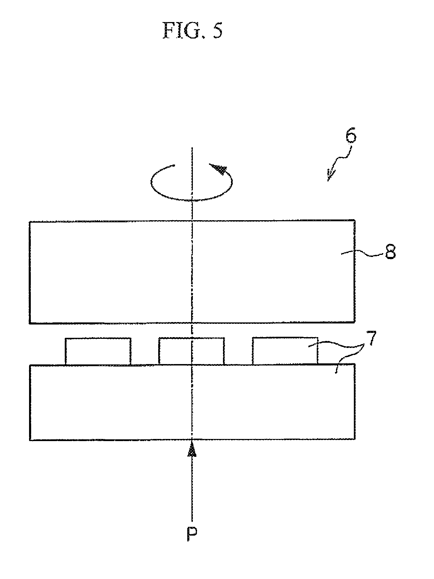

The wear resistance index and the wear resistance index of the mating material were measured by abrasion test. The abrasion test was carried out using a high-load type abrasion tester 6 shown in Fig. 5. Test samples 7 obtained under the same conditions as the piston rings obtained in the above-described Reference Examples 1 to 6, Comparative Reference Examples 1 to 4 and Conventional Examples 1 and 2 were used in this test as fixed pieces. Test samples 7 (fixed pieces) were brought into contact with mating material 8, which was a rotating piece, and a load P was applied to them. Test sample 7 used herein three pins formed by flake graphite cast iron (ϕ 5 mm, 58.9 mm²) and a disk with an outer diameter of 40 mm which was combined with the pins. The outer diameter of the disk was 40 mm, and the thickness of the test sample was 12 mm including the pins. The mating material 8 (rotating piece) was boron cast iron having an outer diameter of 40 mm and a thickness of 12 mm. The test was carried out under the following conditions: lubricating oil, an oil product corresponding to spindle oil; oil temperature, 125°C; peripheral speed, 1.65 m/sec (1050 rpm); contact pressure, 76.4 MPa; test time, 8 hours.

As for the wear resistance and the wear resistance of the mating material, the wear indices of the test samples corresponding to Reference Examples 1 to 6, Comparative Reference Examples 1 to 4 and Conventional Example 2 were compared with the wear index of the test sample corresponding to Conventional Example 1, respectively, to obtain the relative ratio of the wear index of each test sample, which was defined as the wear resistance index. Hence, the test sample having a smaller wear resistance index below 100 is considered to be a sample whose abrasion loss is smaller. In the evaluation of the wear resistance index, the index of not less than 100 and less than 110 was evaluated as "good"; the index of not less than 110 and less than 120 was evaluated as "relatively poor"; and the index of not less than 120 was evaluated as "unacceptable". In the rating of the wear resistance index of the mating material, the index of less than 80 was evaluated as "excellent"; the index of not less than 80 and less than 100 was evaluated as "good"; the index of not less than 100 and less than 120 was evaluated as "relatively poor"; and the index of not less than 120 was evaluated as "unacceptable".

### (Scuffing Resistance Index)

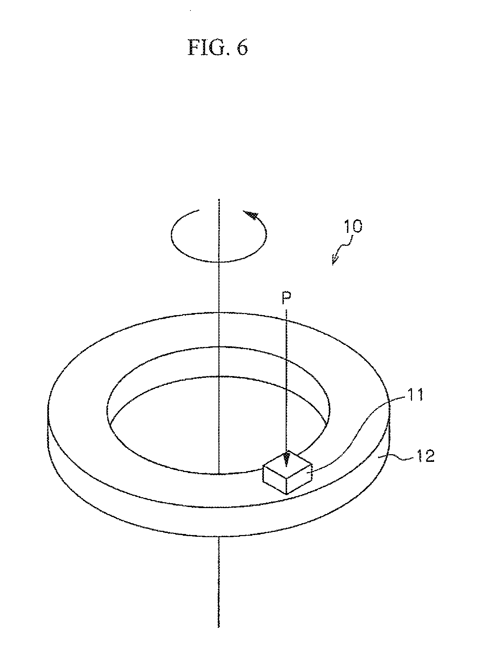

As for the scuffing resistance index, the critical face pressure for scuffing of each specimen 11 was measured with rotary type flat sliding friction tester 10 shown in Fig. 6. In the friction tester, specimen 11 was welded by a prescribed pressure (P) for a given period of time onto a rotating surface of mating material 12 which was rotating at a constant speed. The face pressure at which scuffing occurred was defined as a critical face pressure. Welding by pressure was carried out by keeping an initial pressure of 2.5 MPa for 30 minutes and then progressively increasing the face pressure from 5 MPa by 1 MPa at intervals of every 5 minutes. The measurement was carried out at peripheral speed of 5 m/sec using a mixed oil of SAE30:kerosene =1:1 as a lubricating oil. The oil was applied only before the start of the test. Specimen 11 was flake graphite cast iron, and mating material 12 was boron cast iron.

As for the scuffing resistance, the scuff generating load of the test sample corresponding to Conventional Example 1 was taken as 100, and the scuff generating loads of the test samples corresponding to Reference Examples 1 to 6, Comparative Reference Examples 1 to 4, and Conventional Example 2 were compared with the result of the test sample corresponding to Conventional Example 1, respectively, to obtain the scuffing resistance index. Therefore, the test sample having a greater scuffing resistance index above 100 is considered to be a sample whose scuff generating load is larger, and hence whose scuffing resistance is better than the test sample corresponding to Conventional Example 1. In the evaluation of the scuffing resistance index, the index of not less than 120 was evaluated as "excellent"; the index of not less than 105 and less than 120 was evaluated as "good"; the index of not less than 95 and less than 105 was evaluated as "relatively poor"; and the index of less than 95 was evaluated as "unacceptable".

**<Table 1A>**

| | Composition (% by mass) | Area Rato of Cu or Cu Alloy Phase (%) | | Vickers Hardness of Thermal Sprayed Base Layer (HV0.3) | Vickers Hardness of Cu or Cu-Al-Fe (HV0.01) |
|---|---|---|---|---|---|
| | | Sliding Surface Area Ratio | Cross-Sectional Area Ratio | | |
| Reference Example 1 | 64Mo-35NiCr-1Cu | 0.5 | 0.1 | 542 | 160 |
| Reference Example 2 | 60Mo-35NiCr-5Cu | 5.8 | 1.5 | 540 | 164 |
| Reference Example 3 | 60Mo-30NiCr-10Cu | 10.5 | 4.8 | 501 | 158 |
| Reference Example 4 | 59Mo-29NiCr-12Cu | 12.0 | 10.0 | 498 | 159 |
| Reference Example 5 | 60Mo-35NiCr-5CuAl | 5.5 | 1.3 | 527 | 161 |
| Reference Example 6 | 60Mo-30NiCr-10CuAl | 9.8 | 4.5 | 510 | 160 |
| Conventional Example 1 | 65Mo-35NiCr | - | - | 544 | - |
| Conventional Example 2 | 60Mo-30NiCr-10Cr3C2 | - | - | 384 | - |
| Comparative Preference Example 1 | 64.5Mo-35NiCr-0.5Cu. | 0.4 | 0.1 | 542 | 158 |
| Comparative Reference Example 2 | 59Mo-28NiCr-13Cu | 15.8 | 10.6 | 490 | 162 |
| Comparative Reference Example 3 | 64.5Mo-35NiCr-0.5CuAl | 0.4 | 0.1 | 541 | 157 |
| Comparative Reference Example 4 | 59Mo-28NiCr-13CuAl | 15.5 | 10.3 | 495 | 155 |

**<Table 1B>**

| | Wear Resistance Index | | Wear Resistance Index of Mating Material | | Scuffing Resistance Index | | Overall Evaluation |
|---|---|---|---|---|---|---|---|
| | Index Evaluation | | Index | Evaluation | Index | Evaluation | |
| Reference Example 1 | 104 | good | 89 | good | 105 | good | good |
| Reference Example 2 | 111 | relatively poor | 70 | excellent | 114 | good | good |
| Reference Example 3 | 118 | relatively poor | 58 | excellent | 128 | excellent | excellent |
| Reference Example 4 | 119 | relatively poor | 50 | excellent | 128 | excellent | excellent |
| Reference Example 5 | 109 | good | 72 | excellent | 114 | good | excellent |
| Reference Example 6 | 117 | relatively poor | 60 | excellent | 128 | excellent | excellent |
| Conventional Example 1 | 100 | good | 100 | relatively poor | 100 | relatively poor | relatively poor |
| Conventional Example 2 | 123 | unacceptable | 133 | unacceptable | 100 | relatively poor | unacceptable |
| Comparative Reference Example 1 | 102 | good | 100 | relatively poor | 100 | relatively poor | relatively poor |
| Comparative Reference Example 2 | 125 | unacceptable | 48 | excellent | 130 | excellent | unacceptable |
| Comparative Reference Example 3 | 101 | good | 100 | relatively poor | 100 | relatively poor | relatively poor |
| Comparative Reference Example 4 | 127 | unacceptable | 47 | excellent | 130 | excellent | unacceptable |

### (Evaluation)

Score for overall evaluation was calculated based on each category by taking "excellent" as 2 points, "good" as 1 point and "relatively poor" as 0 point. The scores of three categories, the wear resistance index, the wear resistance index of the mating material and the scuffing resistance index were added, and when the total score was 4 points or more, the overall evaluation was "excellent"; when the total score was 2-3 points, the overall evaluation was "good"; when the total score was 0-1 point, the overall evaluation was "relatively poor"; and when one or more "unacceptable" were included in three categories, the overall evaluation was "unacceptable". It should be noted that those evaluated as "unacceptable" in the overall evaluation are out of the scope of the present invention.

It was confirmed that all Reference Examples are superior in the scuffing resistance and the wear resistance of the mating material to Conventional Examples and Comparative Reference Examples. In particular, the scuffing resistance becomes better when more amount of the Cu or Cu alloy phase is included, which suggests that the initial running-in property to the mating material of the Cu or Cu alloy phase has effectively works. It was also confirmed that the wear resistance of Reference Examples is not substantially different from that of Conventional and Comparative Reference Examples.

Next, the following Experiments 1 to 3 were carried out to investigate the influence of the porosity of thermal sprayed base layer 3 on the wear resistance and the wear resistance of the mating material and the influence of the porosity on the adhesion to the piston ring base material.

### [Experiment 1]

An experiment was carried out to investigate the influence of the porosity of thermal sprayed base layer 3 on the wear resistance and the wear resistance of the mating material. Thermal spray materials used in Reference Example 1 etc. were prepared to form thermal sprayed base layers 3 of 64Mo-35NiCr-1Cu and 60Mo-30NiCr-10Cu with a thickness of 300 µm on the sliding surface of a piston ring including boron cast iron. As for the two thermal sprayed base layers 3, plasma spraying was carried out under different conditions (voltage was changed within the range of 50 to 70 V; current was changed within the range of 450 to 500 A) to obtain thermal sprayed base layers 3 having various porosity as shown in Table 2.

### (Measurement and Evaluation)

A cross-section obtained by cutting the piston ring by a plane parallel to the normal line of the sliding surface (or in the axial direction of the ring) was polished, and the image of the cross-section was taken at a magnification of x200 with a metallographical microscope, followed by analyzing the image using an image analysis software, thereby measuring the porosity of thermal sprayed base layer 3. Polishing of the cross-section of thermal sprayed base layer 3 was carried out using a series of progressively finer abrasive papers of 180, 240, 320, 600, 800 and 1200 grit, followed by buffing with 1.0 µm powder of alumina (aluminum oxide) for 20 seconds. The resulting polished surface was used as a sample for observation of the porosity. Images were taken at randomly selected five sites, and the mean value of the results obtained from analysis of those images was determined, by which the porosity was evaluated (evaluation was also carried out in the same manner in Experiments 2 and 3).

The wear resistance and the wear resistance of the mating material of thermal sprayed base layer 3 used in the experiment were measured in the same manner as in Reference Example 1 etc. described above, and evaluated as a wear resistance index and a wear resistance index of the mating material, respectively. The specific evaluation and the overall rating of each sample were also carried out according to the same criteria. As can be seen from the results shown in Table 2, those having a porosity of 0.62% to 7.71% were well evaluated. These results successfully support the description above that the preferred range of the porosity is from 0.5% to 8%. It is understood that an especially preferred wear resistance index and wear resistance index of the mating material can be obtained when the porosity is from 0.5% to 6%.

Score for overall evaluation was calculated based on each category by taking "excellent" as 2 points, "good" as 1 point and "relatively poor" as 0 point. When the scores of two categories, the wear resistance index and the wear resistance index of the mating material, were added up to 2-4 points, the overall evaluation was "good"; and when the scores were added up to 0-1 point, the overall evaluation was "relatively poor".

**<Table 2A>**

| Composition (% by mass) | Porosity (%) | Wear Resistance Index | |
|---|---|---|---|
| | | Index | Evaluation |
| 64Mo-35NiCr-1Cu | 0.74 | 103 | good |
| | 2.15 | 104 | good |
| | 5.62 | 106 | good |
| | 7.71 | 109 | good |
| | 8.46 | 117 | relatively poor |
| 60Mo-30NiCr-10Cu | 0.62 | 115 | relatively poor |
| | 2.56 | 118 | relatively poor |
| | 5.12 | 118 | relatively poor |
| | 7.65 | 119 | relatively poor |
| | 8.31 | 119 | relatively poor |

**<Table 2B>**

| Composition (% by mass) | Wear Resistance Index of Mating Material | | Overall Evaluation |
|---|---|---|---|
| | Index | Evaluation | |
| 64Mo-35NiCr-1Cu | 92 | good | good |
| | 89 | good | good |
| | 98 | good | good |
| | 107 | relatively poor | relatively poor |
| | 115 | relatively poor | relatively poor |
| 60Mo-30NiCr-10Cu | 60 | excellent | good |
| | 58 | excellent | good |
| | 61 | excellent | good |
| | 72 | excellent | good |
| | 81 | good | relatively poor |

### [Experiment 2]

Next, an experiment was carried out to investigate the influence of the porosity of thermal sprayed base layer 3 on the adhesive strength. In the same manner as in Experiment 1, a thermal spray material used in Reference Example 1 etc. was prepared to form thermal sprayed base layer 3 of 60Mo-30NiCr-10Cu with a thickness of 300 µm on the sliding surface of a piston ring including boron cast iron. As a comparative sample, thermal sprayed base layer 3 of 65Mo-35NiCr not including Cu (the above-described Conventional Example 1) having a thickness of 300 µm was formed on the end face of a cylindrical specimen for measurement of adhesive strength (25 mm outer diameter, 40 mm length). Plasma spraying was carried out under different conditions (voltage was changed within the range of 50 to 70 V; current was changed within the range of 450 to 500 A) to obtain 5 types of thermal sprayed base layers 3 having different porosity as shown in Table 3.

### (Measurement and Evaluation)

In the same manner as in Experiment 1, the porosity of thermal sprayed base layer 3 was measured on a polished cross-section of the cylindrical specimen on which thermal sprayed base layer 3 was formed. The adhesive strength was measured in accordance with JIS H 8667. The end face of the cylindrical specimen on which thermal sprayed base layer 3 was formed and the end face of the cylindrical specimen on which thermal sprayed base layer 3 was not formed were bonded to each other with a thermosetting resin, and both ends of the thus combined tube were clamped with upper and lower chucks of a tensile testing machine to carry out a tensile test. In the tensile test, a load at which thermal sprayed base layer 3 began to be peeled off from the boundary face of boron cast iron or splitting occurred within thermal sprayed base layer 3 was determined at a tensile rate of 1 mm/min, and the determined load was divided by the area of the end face of the cylinder. Taking the value obtained for 65Mo-35NiCr thermal sprayed base layer 3 as 1

(standard), the adhesive strength of 5 types of test samples having different porosity was compared with the standard. The results are shown in Table 3. Peeling which occurred at the boundary face of thermosetting resin and splitting which occurred within the thermosetting resin layer were ignored in the evaluation.

As can be seen from the results in Table 3, the adhesive strength was well evaluated in the case where thermal sprayed base layer 3 used in the experiment had a porosity within the range from 0.71% to 7.52%. These results successfully support the description above that the preferred range of the porosity is from 0.5% to 8%. It is understood that a preferred adhesive strength can be obtained when the porosity is from 3% to 8%.

**<Table 3>**

| Composition (% by mass) | Porosity (%) | Adhesive Strength |
|---|---|---|
| 65Mo-35NiCr | - | 1 |
| 60Mo-30NICr-10Cu | 0.71 | 1.2 |
| | 3.23 | 1.4 |
| | 4.90 | 1.5 |
| | 7.52 | 1.4 |
| | 8.51 | 0.9 |

### [Experiment 3]

Finding that there were a range of the porosity (0.5% to 6%) in which a good wear resistance and a good wear resistance of the mating material were obtained and a range of the porosity (3% to 8%) in which a good adhesive strength was obtained, the next experiment was carried out by firstly forming thermal sprayed base layer 3 of 60Mo-35NiCr-5Cu having a porosity of 5.43% and a thickness of 100 µm on the base material boron cast iron, and then forming thereon thermal sprayed base layer 3 of 60Mo-35NiCr-5Cu having a porosity of 2.46% and a thickness of 200 µm. Evaluation was carried out in the same manner as in Experiment 2 above to find that the adhesive strength was 1.5. Similar experiment was carried out to confirm that a good wear resistance, wear resistance of the mating material and adhesive strength can be obtained by forming thermal sprayed base layer 3 with a porosity of 3% to 8% as an under layer and thermal sprayed base layer 3 with a porosity of 0.5% to 6% as a surface layer.

In the below-described Examples 1 to 13, Comparative Example 1, Conventional Example 1 and Reference Example 2, thermal sprayed laminated coating 5 was formed by thermal sprayed surface layer 4 on a thermal sprayed base layer, and the constitutions of the obtained coating 5 and the property thereof were evaluated. The surface of base layer 3 was not subjected to any mechanical processing such as polishing or blasting prior to the formation of surface layer 4.

### [Examples 1 to 5 and Comparative Example 1]

A CuAlFe alloy powder (average particle diameter: 45 µm) or a Cu powder (average particle diameter: 70 µm) whose composition was the same as that of thermal sprayed surface layer 4 listed in Table 4 was used as a thermal sprayed material. The material was plasma-sprayed on the thermal sprayed base layer (thickness: 300 µm) of Reference Example 2 to form thermal sprayed surface layers 4 (thickness: 300 µm) of Examples 1 to 5 and Comparative Example 1 whose compositions were as shown in Table 4. The component composition of the thermal spray material and thermal sprayed surface layer 4 was quantified with a backscattering measuring apparatus (manufactured by NHV Corporation). Plasma spraying was carried out under the conditions similar to those employed in Reference Example 1, using 9MB Plasma Spray Gun manufactured by Sulzer Metco, at a voltage of 50 to 70 V and a current of 450 to 500 A.

### [Conventional Example 1 and Reference Example 2]

Thermal sprayed base layers 3 (thickness: 300 µm) of Conventional Example 1 and Reference Example 2 shown in Table 4 were the same as those of Conventional Example 1 and Reference Example 2 shown in Table 1. A thermal sprayed surface layer was not formed in Conventional Example 1 and Reference Example 2.

### [Measurement and Evaluation]

In the same manner as used for measurement of the scuffing resistance index shown in Table 1 above, the scuffing resistance index was herein measured with a rotary type flat sliding friction tester 10 shown in Fig. 6. The index was evaluated relatively to Conventional Example 1 in the same manner as the evaluation shown in Table 1. The results are shown in Table 4.

**<Table 4>**

| | Composition of Thermal Sprayed Base Layer (% by mass) | Composition of Thermal Sprayed Surface Layer (% by mass) | Scuffing Resistance Index |
|---|---|---|---|
| Example 1 | 60Mo-35NiCr-5Cu | 70Cu-25Al--5Fe | 117 |
| Example 2 | 60Mo-35NiCr-5Cu | 83Cu-15Al-2Fe | 123 |
| Example 3 | 60Mo-35NiCr-5Cu | 85Cu-13Al-2Fe | 131 |
| Example 4 | 60Mo-35NiCr-5Cu | 90Cu-9Al-1Fe | 142 |
| Example 5 | 60Mo-35NiCr-5Cu | 100Cu | 151 |
| Comparative Example 1 | 60Mo-35NiCr-5Cu | 60Cu-35Al-5Fe | 103 |
| Conventional Example 1 | 65Mo-35NiCr | - | 100 |
| Reference Example 2 | 60Mo-35NiCr-5Cu | - | 114 |

It was confirmed that Examples 1 to 5, in which thermal sprayed surface layer 4 was formed on thermal sprayed base layer 3, were superior in the scuffing resistance to Comparative Example 1 and Reference Example 2. In particular, the scuffing resistance of those with a Cu content of 85 to 100% by mass was good, and those with a Cu content of 90 to 100% by mass had an excellent scuffing resistance.

In the following Examples 6 to 13 and Comparative Examples 2 and 3, thermal sprayed surface layer 4 was formed by arc spraying instead of plasma spraying. The arc spraying was carried out with an arc spraying device using a CuAlFe alloy wire or Cu wire having a diameter of 1.6 mm as a thermal spray material under the following conditions: current, 200 A; voltage, 30 V; air pressure, 20 to 40 PSI.

### [Example 6]

On thermal sprayed base layer 3 (thickness: 300 µm) of Reference Example 1, a thermal spray material CuAlFe alloy wire whose composition was the same as that of the thermal sprayed surface layer shown in Table 5 was arc-sprayed to form thermal sprayed surface layers 4 (thickness: 300 µm) whose composition was as shown in Table 5. The component composition of the thermal spray material and thermal sprayed surface layer 4 was quantified with a backscattering measuring apparatus (manufactured by NHV Corporation).

### [Examples 7 to 9]

In the same manner as in Example 6, thermal spray material CuAlFe alloy wires whose compositions were the same as those of the thermal sprayed surface layers shown in Table 5, respectively, were arc-sprayed on thermal sprayed base layers 3 (thickness: 300 µm) of Examples 7 to 9 to form thermal sprayed surface layers 4 (thickness: 300 µm) whose compositions were as shown in Table 5.

### [Example 10]

In the same manner as in Example 6, a thermal spray material CuAlFe alloy wire whose composition was the same as that of the thermal sprayed surface layer shown in Table 5 was arc-sprayed on thermal sprayed base layer 3 (thickness: 300 µm) of Reference Example 5 to form thermal sprayed surface layer 4 (thickness: 300 µm) whose composition was as shown in Table 5.

### [Examples 11 to 13]

In the same manner as in Example 6, thermal spray material CuAlFe alloy wires whose compositions were the same as those of the thermal sprayed surface layers shown in Table 5, respectively, were arc-sprayed on thermal sprayed base layers 3 (thickness: 300 µm) of Reference Examples 3 and 4 to form thermal sprayed surface layers 4 (thickness: 300 µm) whose compositions were as shown in Table 5. Thermal sprayed base layer 3 of Example 13 included more Cu than that of Example 12 by 1% by mass.

### [Comparative Examples 2, 3]

In the same manner as in Example 6, a thermal spray material CuAlFe alloy wire or Cu wire whose composition was the same as that of the thermal sprayed surface layer shown in Table 5, respectively, was arc-sprayed on thermal sprayed base layer 3 (thickness: 300 µm) of Conventional Example 1 shown in Tables 1 and 4 to form thermal sprayed surface layers 4 (thickness: 300 µm) whose compositions were as shown in Table 5.

### [Measurement and Evaluation]

The adhesive strength was measured in the same manner as used for measurement of the adhesive strength shown in Table 3 above. Taking the adhesive strength data of Comparative Example 2 as 100, the obtained adhesive strength data were relatively evaluated to obtain the adhesive strength index. The measured adhesive strength mainly represents the ply adhesion between thermal sprayed base layer 3 and surface layer 4. The results are shown in Table 5.

In Table 5, the sliding surface area ratio of the Cu phase or the Cu alloy phase in thermal sprayed base layer 3 was measured in the same manner as used for measurement of those shown in Table 1. For measurement of the amount of oxidative products (area ratio: %) in thermal sprayed surface layer 4, a cross-section obtained by cutting the piston ring by a plane parallel to the normal line of the sliding surface (or in the axial direction of the piston ring) was polished, and the image of the cross-section was taken at a magnification of x200 with the metallographical microscope, followed by analyzing the image using the image analysis software. Polishing of the cross-section was carried out using a series of progressively finer abrasive papers of 180, 240, 320, 600, 800 and 1200 grit, followed by buffing with 1.0 µm powder of alumina (aluminum oxide) for 20 seconds. The resulting polished surface was used as a sample for observation of the amount of oxidative products. Images were taken at randomly selected five sites, and the mean value of the results obtained from analysis of those images was determined, by which the amount of oxidative products was evaluated.

**<Table 5A>**

| | Thermal Sprayed Base Layer | | |
|---|---|---|---|
| | Composition (% by mass) | Area Ratio of Cu or Cu Alloy Phase (%) | |
| | | Sliding Surface Area Ratio | Cross-Sectional Area Ratio |
| Example 6 | 64Mo-35NiCr-1Cu | 0.5 | 0.1 |
| Example 7 | 60Mo-35NiCr-5Cu | 5.8 | 1.5 |
| Example 8 | 60Mo-35NiCr-5Cu | 5.8 | 1.5 |
| Example 9 | 60Mo-35NiCr-5Cu | 5.8 | 1.5 |
| Example 10 | 60Mo-35NiCr-5CuAl | 5.5 | 1.3 |
| Example 11 | 60Mo-30NiCr-10Cu | 10.5 | 4.8 |
| Example 12 | 59Mo-29NiCr-12Cu | 12 | 10.0 |
| Example 13 | 59Mo-28NiCr-13Cu | 14.9 | 10.6 |
| Comparative Example 2 | 65Mo-35NiCr | 0 | 0 |
| Comparative Example 3 | 65Mo-35NiCr | 0 | 0 |

**<Table 5B>**

| | Thermal Sprayed Surface Layer | | | Adhesive Strength Index |
|---|---|---|---|---|
| | Composition (% by mass) | Amount of Oxidative Products (%) | Vickers Hardness Hv0.05 | |
| Example 6 | 90Cu-9Al-1Fe | 14.6 | 183 | 102 |
| Example 7 | 100Cu | 5.2 | 133 | 105 |
| Example 8 | 90Cu-9Al-1Fe | 14.6 | 183 | 106 |
| Example 9 | 85Cu-13Al-2Fe | 19.1 | 198 | 107 |
| Example 10 | 90Cu-9Al-1Fe | 14.6 | 183 | 107 |
| Example 11 | 90Cu-9Al-1Fe | | | 109 |
| Example 12 | 90Cu-9Al-1Fe | | | 110 |
| Example 13 | 90Cu-9Al-1Fe | | | 111 |
| Comparative Example 2 | 100Cu | 5.2 | 133 | 100 |
| Comparative Example 3 | 90Cu-9Al-1Fe | 14.6 | 183 | 101 |

In Examples 6 to 13, the Cu content in thermal sprayed surface layer 4 was within 85 to 100% by mass. In thermal sprayed laminated coating 5 having thermal sprayed surface layer 4, the adhesive strength became stronger as the Cu content in and the Cu phase area ratio of thermal sprayed base layer 3 increased, as shown in Table 5. Specifically, Cu contents in thermal sprayed base layer 3 in ascending order of the adhesive strength index were 1% by mass, 5% by mass, 10% by mass, 12% by mass and 13% by mass, and the area ratio of Cu phase were 0.5 to 15%. Particularly, the adhesive strength index was high in the case where the Cu content was over 5% by mass and the area ratio ofCu phase was also over 5% (specifically, the Cu content was more than 10% by mass and the area ratio of Cu phase was 10 to 15%).

The amount (area ratio: %) of oxidative products in thermal sprayed surface layer 4 was within 5% to 20%. It was found that thermal sprayed laminated coating 5 formed by thermal sprayed surface layer 4 including such an amount of oxidative products on thermal sprayed base layer 3 had a good adhesive strength index (see, Table 5).

Piston ring 1 prepared in each Examples above can improve the initial running-in property as well as can reduce damage to a mating material still more by virtue of the low Vickers hardness. Moreover, the adhesion (ply adhesion) of thermal sprayed laminated coating 5 formed by thermal sprayed base layer 3 and thermal sprayed surface layer 4 is improved, which can sustain the above-mentioned effects concerning the initial running-in property and the damage to a mating material still more. Furthermore, both Thermal sprayed base layer 3 and surface layer 4 can be formed by thermal spraying technique, and in addition, no mechanical processing is necessary for base layer 3 before forming surface layer 4. Therefore, the man-hour can be saved, which is also advantageous from the viewpoint of cost reduction.

## Claims

1. A piston ring (1) comprising:
a thermal sprayed base layer (3) formed by thermal spraying of a mixed powder including at least Mo powder, Ni-based self-fluxing alloy powder and Cu and/or Cu alloy powder; and
a thermal sprayed surface layer (4) including Cu, the thermal sprayed surface layer being formed on a sliding surface of the thermal sprayed based layer (3), wherein
the thermal sprayed base layer (3) at least includes 50 to 80 % by mass ofMo, 1 to 12 % by mass of Cu and/or Cu alloy, and a remainder being Ni-based self-fluxing alloy,
the area ratio of Cu and/or Cu alloy phase that appears on the sliding surface of the thermal sprayed base layer (3) is 0.5 to 15%, and
the thermal sprayed surface layer (4) includes 70 to 100% by mass of Cu.

2. The piston ring (1) according to claim 1, wherein the area ratio of a Cu and/or Cu alloy phase that appears on a cross-section of the thermal sprayed base layer (3) is 0.1 to 10%.

3. The piston ring (1) according to claim 1 or 2, wherein the piston ring (1) is used for a ship.

## Patentansprüche

1. Kolbenring (1), umfassend:
eine thermisch gespritzte Basisschicht (3), gebildet durch thermisches Spritzen eines gemischten Pulvers, das zumindest Mo-Pulver, ein selbstschmelzendes Legierungspulver auf Ni-Basis und ein Cu- und/oder Cu-Legierungs-Pulver enthält; und
eine thermisch gespritzte Oberflächenschicht (4), die Cu enthält, wobei die thermisch gespritzte Oberflächenschicht auf einer Gleitfläche der thermisch gespritzten Basisschicht (3) gebildet ist, wobei
die thermisch gespritzte Basisschicht (3) mindestens 50 bis 80 Masseprozent Mo, 1 bis 12 Masseprozent Cu und/oder Cu-Legierung und den Rest selbstschmelzende Legierung auf Ni-Basis enthält,
wobei das Flächenverhältnis der Cu- und/oder Cu-Legierungs-Phase, die auf der Gleitfläche der thermisch gespritzten Basisschicht (3) in Erscheinung tritt, 0,5 bis 15 % beträgt, und
die thermisch gespritzte Oberflächenschicht (4) 70 bis 100 Masseprozent Cu enthält.

2. Kolbenring (1) nach Anspruch 1, bei dem das Flächenverhältnis eine Cu- und/oder Cu-Legierungsphase, die an einem Querschnitt der thermisch gespritzten Basisschicht (3) erscheint, 0,1 bis 10 % beträgt.

3. Kolbenring (1) nach Anspruch 1 oder 2, wobei der Kolbenring (1) für ein Schiff eingesetzt wird.

## Revendications

1. Segment de piston (1) comprenant :
une couche de base pulvérisée thermiquement (3) formée par pulvérisation thermique d'un mélange de poudres comprenant au moins une poudre de Mo, d'une poudre d'un alliage autodécapant à base de Ni et d'une poudre de Cu et/ou d'un alliage de Cu ; et
une couche de surface pulvérisée thermiquement (4) comprenant du Cu, la couche de surface pulvérisée thermiquement étant formée sur une surface de glissement de la couche de base pulvérisée thermiquement (3), dans lequel
la couche de base pulvérisée thermiquement (3) comprend au moins de 50 à 80 % en poids de Mo, de 1 à 12 % en poids de Cu et/ou d'un alliage de Cu, et le reste étant un alliage autodécapant à base de Ni,
le rapport de surface de la phase de Cu et/ou d'alliage de Cu qui apparait sur la surface de glissement de la couche de base pulvérisée thermiquement (3) est de 0,5 à 15 %, et
la couche de surface pulvérisée thermiquement (4) comprend de 70 à 100 % en poids de Cu.

2. Segment de piston (1) selon la revendication 1, dans lequel le rapport de surface de la phase de Cu et/ou d'alliage de Cu qui apparait sur la surface de glissement de la couche de base pulvérisée thermiquement (3) est de 0,1 à 10 %.

3. Segment de piston (1) selon la revendication 1 ou 2, le segment de piston (1) étant utilisé pour un bateau.
